# EUROPEAN PATENT APPLICATION

(11) **EP 4 231 598 A1**
(43) Date of publication of application: **23.08.2023**
(21) Application number: 21880600.8
(22) Date of filing: 15.10.2021
(51) Int. Cl.: H04L 27/26, H04L 27/00, H04L 1/00, H04L 5/00, H04W 72/04, H04W 72/12, H04W 74/00

(54) **METHOD AND DEVICE FOR TRANSMITTING/RECEIVING SIGNALS IN WIRELESS COMMUNICATION SYSTEM**

(30) Priority: 15.10.2020 KR 20200133778
(71) Applicant: LG ELECTRONICS INC., Yeongdeungpo-Gu Seoul 07336 (KR)
(72) Inventor: CHOI, Seunghwan, Seoul 06772 (KR); YANG, Suckchel, Seoul 06772 (KR); KIM, Seonwook, Seoul 06772 (KR)
(74) Representative: Plasseraud IP
(86) International application number: PCT/KR2021/014369
(87) International publication number: WO 2022/080954

(57) **Abstract**

Abstract: A method and a device for transmitting/receiving signals in a wireless communication system, according to one embodiment of the present disclosure, comprise: a step of receiving a first signal and receiving a second signal after receiving the first signal; or a step of transmitting a first signal and transmitting a second signal after transmitting the first signal. The beam switching time and/or the power transient time between the first signal and the second signal is set to include, on the basis of a long CP that is present between the first signal and the second signal, all or some of time intervals forming the long CP. The long CP has a length of 16·Ts that is set in units of 0.5 ms.

## Description

### [Technical Field]

The present disclosure relates to a method and apparatus for use in a wireless communication system, and more particularly to a method and apparatus for transmitting and receiving a data signal.

### [Background Art]

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### [Disclosure]

### [Technical Problem]

An objective of the present disclosure is to provide a method of transmitting and receiving a signal and an apparatus therefor for effectively performing a process of transmitting and receiving a data signal in a wireless communication system.

The technical problem of the present disclosure is not limited to the above-described technical problem, and other technical problems may be inferred from the embodiments of the present disclosure.

### [Technical Solution]

The present disclosure provides a method and apparatus for transmitting and receiving a signal in a wireless communication system.

According to an aspect of the present disclosure, a method of transmitting and receiving a signal by a user equipment (UE) in a wireless communication system includes transmitting or receiving a first signal, and transmitting or receiving a second signal after the transmitting or receiving the first signal, wherein based on that a long cyclic prefix (CP) is present between the first signal and the second signal, a beam switching time and/or a power transient time between the first signal and the second signal is configured to include some or all of a time period configuring the long CP, and the long CP is a CP having a length of 16·Ts seconds added to a normal CP in units of 0.5 ms.

According to another aspect of the present disclosure, an apparatus, a processor, and a storage medium for performing the signal transmission and reception method may be provided.

The apparatus may at least include a UE, a network, and an autonomous driving vehicle that is capable of communicating with another autonomous driving vehicle other than the communication device.

The aspects of the disclosure are only a part of the preferred embodiments of the disclosure, and various embodiments based on technical features of the disclosure may be devised and understood by the person with ordinary skill in the art based on the detailed description of the disclosure.

### [Advantageous Effects]

According to an embodiment of the present disclosure, effective signal transmission and reception may be advantageously performed through an operation differentiated from the conventional technology when a data signal is transmitted and received between communication devices.

The technical effects of the present disclosure are not limited to the above-described technical effects, and other technical effects may be inferred from the embodiments of the present disclosure.

### [Description of Drawings]

FIG. 1 illustrates a radio frame structure.
FIG. 2 illustrates a resource grid during the duration of a slot.
FIG. 3 illustrates a self-contained slot structure.
FIG. 4 illustrates a structure of a slot to which a mixed numerology is applied.
FIGS. 5 to 6 illustrate methods of transmitting and receiving a signal according to an embodiment of the present disclosure.
FIGS. 7 to 10 show an example of apparatuses according to an embodiment of the present disclosure.

### [Best Mode]

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system, "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP LTE

- 36.211: Physical channels and modulation
- 36.212: Multiplexing and channel coding
- 36.213: Physical layer procedures
- 36.300: Overall description
- 36.331: Radio Resource Control (RRC)

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

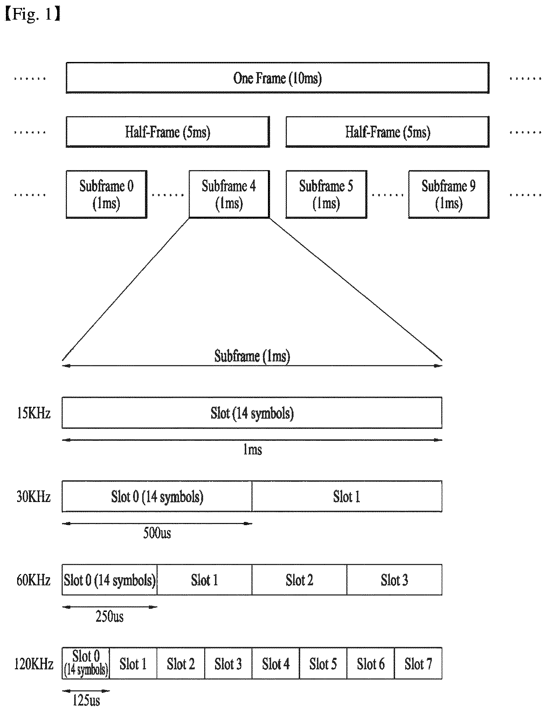

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15^{∗}2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u-4) | 14 | 160 | 16 |

| | | | |
|---|---|---|---|
| ^{∗} N^{slot}_{symb}: number of symbols in a slot ^{∗} N^{frame,u}ₛₗₒₜ: number of slots in a frame ^{∗} N^{subframe,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15∗2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

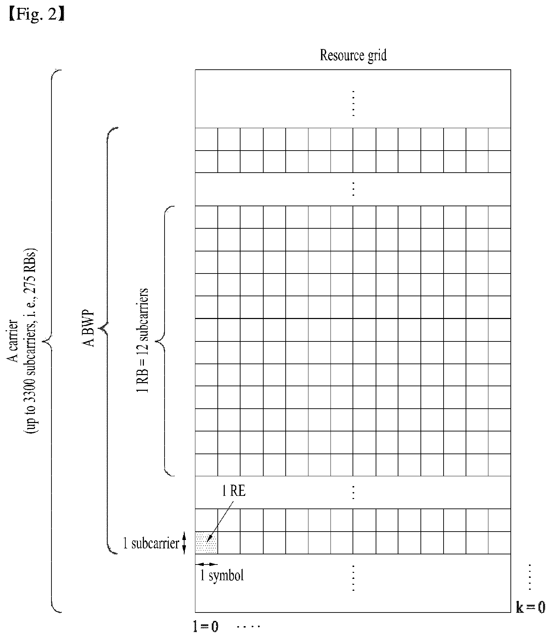

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m∈ {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

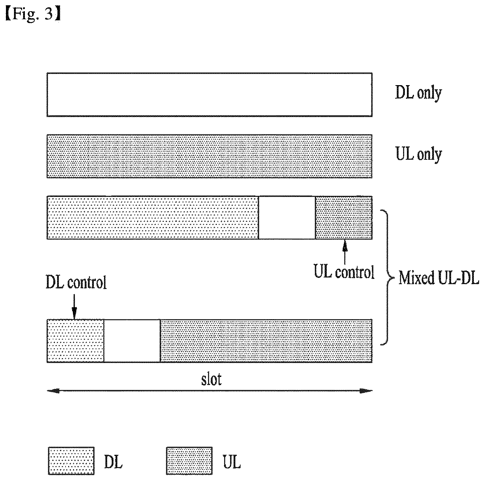

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.
1. DL only configuration
2. UL only configuration
3. Mixed UL-DL configuration
   - DL region + Guard period (GP) + UL control region
   - DL control region + GP + UL region
      ^{∗} DL region: (i) DL data region, (ii) DL control region + DL data region
      ^{∗} UL region: (i) UL data region, (ii) UL data region + UL control region

The PDCCH may be transmitted in the DL control region, and the PDSCH may be transmitted in the DL data region. The PUCCH may be transmitted in the UL control region, and the PUSCH may be transmitted in the UL data region. The GP provides a time gap in the process of the UE switching from the transmission mode to the reception mode or from the reception mode to the transmission mode. Some symbols at the time of switching from DL to UL within a subframe may be configured as the GP.

In the present disclosure, a base station (BS) may be, for example, a gNode B (gNB).

### 1. Long CPs and how to use them

The above description (NR frame structure, etc.) may be applied in combination with the methods proposed in the present disclosure, which will be described later, or may be supplemented to clarify the technical features of the methods proposed in the present disclosure.

The NR supports multiple numerologies or Subcarrier spacing (SCS) to support various 5G services. For example, when the SCS is 15 kHz, the NR may support a wide area in a traditional cellular band, when the SCS is 30 kHz/60 kHz, the NR may support dense-urban, lower latency, and a wider carrier bandwidth, and when the SCS is 60 kHz or higher, the NR may support a band of 24.25 GHz or higher. A conventional NR frequency band may be defined as two types (FR1 and FR2) of frequency ranges and may be configured as shown in Table 3. In addition, discussions are underway to support a future NR system in a frequency band defined in FR1/FR2 or higher (e.g., 52.6 GHz to 71 GHz).

**[Table 3]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

In an NR system operating in a frequency band equal to or higher than FR2 (e.g., 52.6 GHz to 71 GHz), an influence of phase noise may be relatively large, and to compensate for this, new numerology may be introduced. In this case, for example, the SCS may be greater than 240 kHz (e.g., 480 kHz or 960 kHz or 1920 kHz), and thus a time domain waveform, that is, the length of the OFDM symbol or DFT-s-OFDM symbol in the time domain may be reduced. Simultaneously, the length of a CP may also be shortened according to an increasing rate of the SCS. A change in an OFDM symbol and a CP length is shown in Table 4. In this case, an SCS of 480 kHz or more in Table 4 is a value that is discussed for introduction for an NR operation in a frequency band of 52.6 GHz or more. Values related to the SCSs are a symbol length and CP length calculated according to the frame structure of the NR.

**[Table 4]**

| Subcarrier Spacing [kHz] | Useful Symbol Time [usec] | Cyclic Prefix [usec] |
|---|---|---|
| 15 | 66.67 | 4.69 |
| 30 | 33.33 | 2.34 |
| 60 | 16.67 | 1.17 |
| 120 | 8.33 | 0.59 |
| 240 | 4.17 | 0.29 |
| 480 | 2.08 | 0.15 |
| 960 | 1.04 | 0.07 |
| 1920 | 0.52 | 0.04 |

As described above, in a frame structure of the NR, a long CP (large CP or long CP) with a length of 16· TS (seconds) is inserted every half of a subframe (= 1 ms), that is, every 0.5 ms. Accordingly, a CP having a length obtained by adding a normal CP length and a long CP length is configured in a half subframe (in units of 0.5 ms). Ts may be a value that satisfies 30720·T_{S}=1 ms or a value that satisfies T_{S}=1/(15·10³·2048). The long CP may have a length of about 520 ns regardless of numerology (or SCS).

In detail, a normal CP may have a length of 144κ^{∗}2^{-µ}. A long CP may have a length of 16κ added to the normal CP. κ is a constant and has a value of 64. µ is a subcarrier spacing (SCS) configuration value, and may have a value of one of natural numbers greater than or equal to 0 based on the SCS. In this paragraph, units of 144κ^{∗}2^{-µ} and 16κ are not seconds, and 144κ^{∗}2^{-µ} and 16κ may be multiplied by T_{C} for conversion into seconds. T_{C} is a value that satisfies T_{C}=1/(480·10³·4096), and κ=T_{S}/T_{C}. Therefore, since κ^{∗}T_{C}=T_{S}, a normal CP may have a length of 144T_{S}^{∗}2^{-µ}(sec) in units of seconds.

Based on this, it may be possible to easily match OFDM symbol boundaries corresponding to different numerologies in a mixed numerology situation, and the numerologies may be effectively changed.

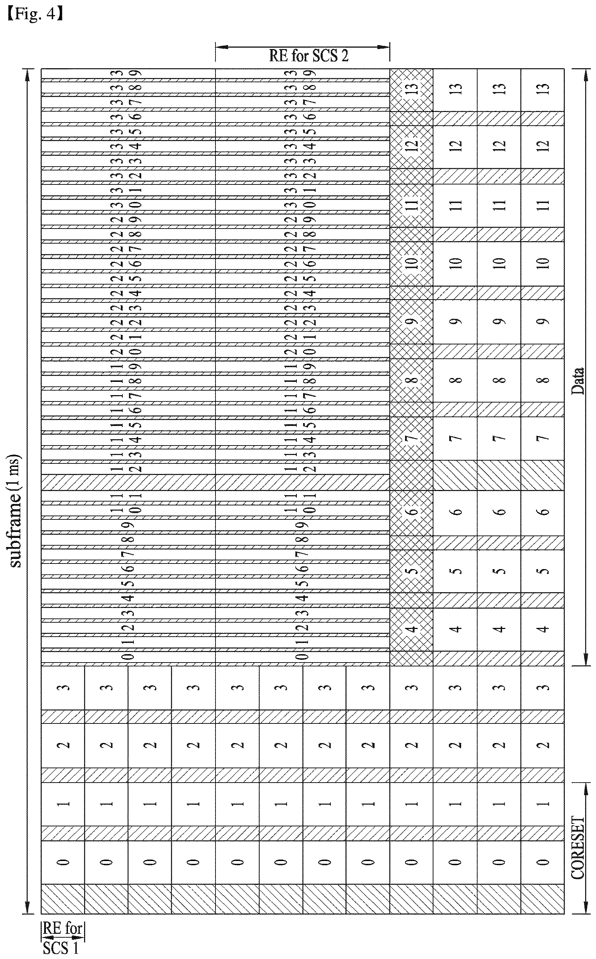

An example of the mixed numerology is shown in FIG. 4. In FIG. 4, hatched portions correspond to CP sections. In FIG. 4, a structure in which Orthogonal Frequency Division Multiplexing (OFDM) symbols using different SCSs coexist in a single slot (14 OFDM symbols) is considered. In this case, a situation in which at least two different SCSs are included in a specific time duration may be considered. The specific time duration may be, for example, 1 subframe length (1ms). When two different SCSs are considered, a relatively small SCS may be referred to as SCS1 and a relatively large SCS may be referred to as SCS2. An OFDM symbol using the SCS2 is referred to as a sub-OFDM symbol. M (M=SCS2/SCS1) sub-OFDM symbols may be included in one OFDM symbol. A boundary obtained by combining M sub-OFDM symbols may be configured to align with one OFDM symbol boundary. A boundary combining M sub-OFDM symbols may be determined based on the sum of CPs and symbols. Sub-OFDM symbols with M multiples of SCS (SCS2) are multiplexed according to the length of the small SCS (SCS1). When the FFT size applied in this case is N points for SCS1, the FFT size may be N/M points for SCS2. Characteristically, the BS may configure an SCS value to be used for a specific signal and/or channel using higher layer signaling (e.g., SIB or dedicated RRC) or DCI. The UE may receive and recognize that the same numerology is used for different channels or receive and recognize that different numerologies are used according to information indicated by the BS.

As seen from FIG. 4, a CP longer than CPs of other symbols is inserted in a front part of #7 OFDM symbol of the SCS1 and a front part of #12 OFDM symbol of the SCS2. It may be seen that, considering a CP length configured in a symbol other than #7 OFDM symbol and a CP length configured in another symbol other than #12 OFDM symbol, a long CP of the same length is added in half subframe units regardless of a SCS. Referring to FIG. 4, a long CP is also added to a front of #0 OFDM symbol of the SCS1. A CP that does not include a long CP located in OFDM symbols other than #0 OFDM symbol of the SCS1, #7 OFDM symbol of the SCS1, and #12 OFDM symbol of the SCS2 may be a normal CP or an extended CP.

The NR system may operate based on a beam, and transmission/reception operations thereof may become unstable during switching between different beams. A beam switching time needs to be ensured for a stable transmission/reception operation. Accordingly, even in the existing communication system, a predetermined level of beam switching time may be ensured when changing from downlink (DL) to uplink (UL) or vice versa. In addition, a beam switching time is required for a stable operation even during switching between DL beams or switching between UL beams, and a beam switching time of about 100 ns is recommended for stable beam change.

In the existing system, since all the CP lengths to be configured in FR1/FR2 have a value greater than 100 ns, beam switching may be performed during such a CP period, and thus a period gap for separate beam switching is not requested. However, as shown in [Table 4], when an SCS of 960 kHz or higher is introduced, beam switching may not be completed during a CP period, and thus an OFDM symbol for a separate beam switching gap may be required. In addition, even in the case of a SCS of 480 kHz, a CP having a length of 150 ns may seem sufficient considering only beam switching, but there is not enough margin for FFT window positioning in an OFDM reception operation, and thus stable reception/demodulation may be difficult. Currently, through the 3GPP RAN1 conference, introduction of the above-mentioned beam switching gap symbol has been discussed when a large SCS is used.

When transmission is switched from OFF to ON or from ON to OFF, or when a frequency resource used for transmission is changed (RB hopping), a power transient time or transmit transient period of a predetermined time before an effective transmission section is required. For example, the UE may perform power ramping until target transmission power is reached during this transient time. A transient time of about 10 us in the FR1 band of the conventional system and a transient time of about 5 us in the FR2 band may be recommended. This transient time may be relatively long compared to an OFDM symbol length (compared to the existing FR1/FR2 operation) when an OFDM symbol length is shortened due to introduction of a large SCS (e.g., 480 kHz or higher).

Considering this, in the case of using an SCS of 480 kHz or more for the NR operating in a high frequency band of 52.6 GHz or more, a method that is effectively used in beam switching of a long CP (i.e., the aforementioned CP having a length of 520 ns inserted every 0.5 ms) and/or a power transient time may be proposed.

### Embodiment 1) Method using long CP as beam switching time

As described above, when a large SCS (e.g., SCS of 480 kHz or more) is configured for the NR operating in a high frequency band of 52.6 GHz or higher, the CP length may be insufficient to stably perform beam switching. Accordingly, a separate beam switching gap symbol needs to be used. However, when beam switching is performed in an OFDM symbol including a long CP, it may be possible to stably change a beam during a long CP period even if a gap symbol is not added exceptionally. To this end, the BS and the UE need to make an appointment in advance not to use a separate gap symbol when beam switching is performed on a symbol including a long CP.

As a specific embodiment of this, when a large SCS (e.g., 960 kHz) is configured for downlink, a situation in which one gap symbol is promised to be used immediately before beam switching may be considered. In this case, a long CP inserted every 0.5 ms through higher layer signaling such as RRC may be configured not to use a gap symbol for separate beam switching. When beam switching is performed in an OFDM symbol including a long CP, the BS may schedule the UE not to use a gap symbol and to use a gap symbol at other beam switching moments. The UE may know whether a gap symbol required for beam switching by applying the same rule (through scheduling of the BS).

As another embodiment of this, when the BS indicates beam switching to the UE, the BS may configure to perform beam switching in a symbol including a long CP. The UE may operate according thereto. As such, the number of the added gap symbols may be reduced. In this case, the BS needs to configure the UE to perform beam switching in a long CP within a predetermined time period. The UE may operate in an expectation that the BS needs to configure beam switching to be performed in a long CP within a predetermined time period.

Alternatively, the BS generally indicates beam switching to include a long CP within a predetermined time period, and beam switching in a non-long CP may be indicated separately. In addition, beam switching in a non-long CP may operate according to a pre-scheduled rule between the BS and the UE.

In another embodiment, when a period of beam switching is configured to 0.5 ms, the BS may perform scheduling to perform beam switching only on a symbol including a long CP. The UE may perform beam change according to indication of the BS without checking a gap symbol. According to this, the BS may perform beam switching in a long CP without a separate operation.

As an example of an operation according to Embodiment 1, if beam switching time of the UE is required between DL signal/channel #1 and DL signal/channel #2 consecutive in the time domain (or between UL signal/channel #1 and UL signal/channel #2), the UE may expect to configure at least n (e.g., n=1) symbol gaps between the corresponding channels. In this case, the n value may be configured and/or defined differently depending on whether a first symbol of the following DL signal/channel #2 (or UL signal/channel #2) includes a long CP. For example, the n value may be n=0 if the first symbol of the following DL signal/channel #2 (or UL signal/channel #2) includes a long CP, or the n value may be n=1 if the first symbol of the following DL signal/channel #2 (or UL signal/channel #2) does not include a long CP.

### Embodiment 2) Method using long CP as power transient time

As described above, a long CP may be used for power transient time required when the UE switches from transmission OFF to ON, or vice versa. Currently, a recommended power transient time for a stable NR operation may be 10 us for an FR1 band and 5 us for an FR2 band. For example, if 120 kHz of the FR2 band is configured to an SCS, one symbol (in this case, the symbol length is about 8.9 us) immediately before actual transmission of the UE needs to be used for the power transient time. On the other hand, in the case of a SCS of 240 kHz, since the length of a symbol is about 4.5 us, 2 symbols are used for the power transient time. If an SCS of 480 kHz is used, the length of the symbol is about 2.2 us, and thus 3 symbols are used for the power transient time. Therefore, when a large SCS (e.g., 960 kHz) is used in a high-frequency band of 52.6 GHz or higher, which has been currently discussed, the power transient time may be a long time (relatively to the length of a symbol of FR1/FR2 bands) corresponding to a plurality of OFDM symbols. Accordingly, a reduction method for the power transient time may be beneficial in terms of resource efficiency.

To this end, the present disclosure proposes a method using a long CP period as a power transient time in an NR environment in which a large SCS (e.g., 960 kHz) is used. Specifically, when a symbol including a long CP is a first symbol of transmission of the UE, the number of a plurality of symbols required immediately before transmission starts may be reduced by configuring the long CP period to be used as the power transient time.

In more detail, whether a long CP period is used as a power transient time may be semi-statically configured through higher layer signaling such as RRC. When configured, the BS may schedule a UL operation (via DCI) to the UE to include a long CP in the power transient time. The semi-static configuration may be determined according to an operating frequency band (e.g., 52.6 GHz or higher) and/or the SCS used (e.g., 960 kHz).

In addition to the method using an entire long CP period as the power transient time, only a part of the long CP period may be configured as the power transient time. In this case, available values as a ratio used as the power transient time within a long CP period may be predefined in a higher layer parameter such as RRC. A network may configure a specific value among the available values to the UE according to the recommended power transient time in the corresponding frequency band. In a high-frequency band of 52.6 GHz or higher, the frequency domain to be scheduled may be broadband, and since a time length of each symbol is shortened, there is a possibility that the recommended power transient time is shorter than 5 us, and according to this recommended time, a ratio used as a power transient time in the long CP period may be configured. In addition, since the length of a symbol corresponding to each SCS is different in a mixed numerology situation, the ratio used as a power transient time in the long CP period may be configured in consideration of the mixed numerology.

The proposed method described above may also be applied to the power transient time required during continuous transmission of the UE using different frequency channels. For example, when the UE continuously transmits UL channel #1 and UL channel #2, if the last symbol of UL channel #1 is a normal CP symbol and a first symbol of UL channel #2 adjacent thereto is a symbol including a long CP, time loss due to the power transient time may be reduced when a more power transient time is distributed to a symbol containing a long CP than when the power transient time between two channels is equally distributed to each channel. In detail, the power transient time (e.g. T usec) may be allocated to the last symbol(s) of UL channel #1 and the first symbol(s) of UL channel #2 at a ratio of 1:N (N> 1), and the N Values may be defined and/or configured in advance.

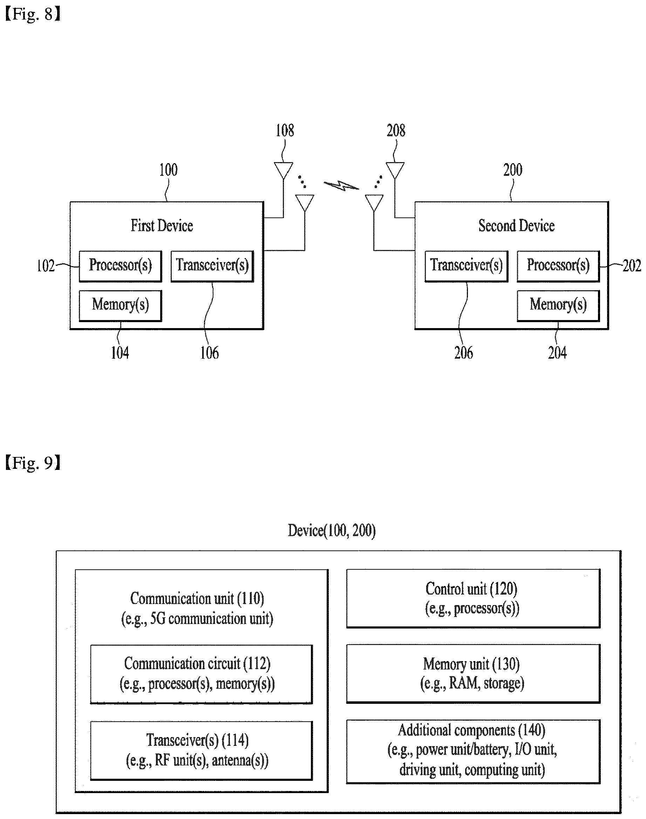

Since examples of the above-described proposal method may also be included in one of implementation methods of the various embodiments of the present disclosure, it is obvious that the examples are regarded as a sort of proposed methods. Although the above-proposed methods may be independently implemented, the proposed methods may be implemented in a combined (aggregated) form of a part of the proposed methods. A rule may be defined such that the BS informs the UE of information as to whether the proposed methods are applied (or information about rules of the proposed methods) through a predefined signal (e.g., a physical layer signal or a higher-layer signal). For example, whether a CP having the structure shown in FIG. 9 is applied as one of the proposed methods of the present disclosure may be indicated by the BS to the UE through a predefined signal. The high layer may include, for example, one or more of functional layers such as MAC, RLC, PDCP, RRC, and SDAP.

Methods, embodiments, or descriptions for implementing the method proposed in this specification may be separately applied or one or more methods (or embodiments or descriptions) may be applied in combination.

### Embodiment

Embodiments of the present disclosure may be implemented by organically combining one or more of the operations described above.

One of the embodiments implemented by a combination of the operations described in the present disclosure may be as shown in FIG. 11.

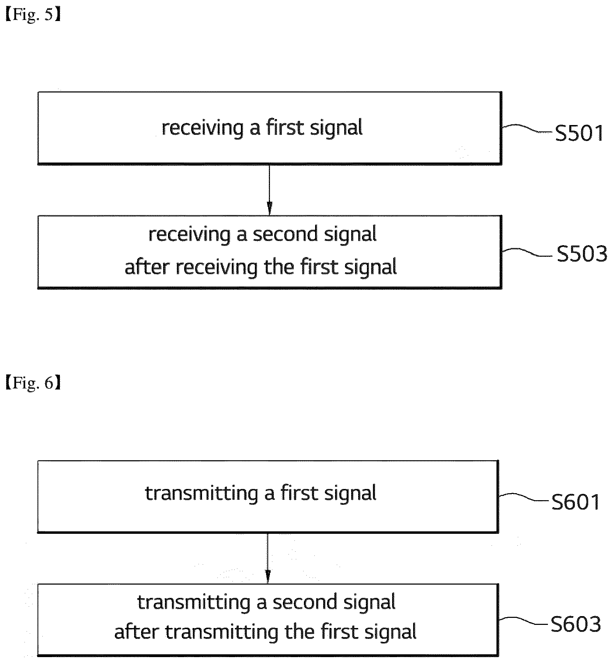

FIGS. 5 and 6 are flowcharts of a method of transmitting and receiving a signal according to an embodiment of the present disclosure.

Referring to FIG. 5, an embodiment of the present disclosure implemented through a UE may include receiving a first signal (S501) and receiving a second signal after receiving the first signal (S603).

Referring to FIG. 6, an embodiment of the present disclosure implemented through the UE may include transmitting a first signal (S601) and transmitting a second signal after transmitting the first signal (S603).

Although not shown, an embodiment of the present disclosure implemented by the UE may be performed by combining the operations of FIGS. 5 and 6. For example, an embodiment of the present disclosure may include receiving the first signal and transmitting the second signal after receiving the first signal. In addition, an embodiment of the present disclosure may include transmitting the first signal and receiving the second signal after transmitting the first signal.

The first signal may be one of uplink and/or downlink signals and/or channels disclosed in 3GPP LTE and NR documents.

The second signal may be one of uplink and/or downlink signals and/or channels disclosed in 3GPP LTE and NR documents.

The first signal and the second signal may be the same signal and/or channel or may be different signals and/or channels.

Referring to Embodiments 1 and 2 of Section 1, a long CP may be present between the first signal and the second signal. When a long CP is present between the first signal and the second signal, the long CP period may be used as beam switching time and/or power transient time. For example, based on presence of a long CP between the first signal and the second signal, the UE may be configured to include some or all of a time period configuring a long CP in the beam switching time and/or power transient time between the first signal and the second signal. As described above, the long CP may be a CP of a constant length configured in units of half subframes. In detail, the long CP may be a CP with a predetermined length of 16·T_{S} (seconds) configured in units of 0.5 ms. Ts may be a value that satisfies 30720·T_{S}=1ms. The length of the length of the long CP may be about 520 ns by inserting a Ts value that satisfies 30720·T_{S}=1ms. When a long CP is present between the first signal and the second signal, the actual CP length configured in the symbol including the corresponding long CP may be the sum of the normal CP length and the long CP length.

Referring to Embodiments 1 and 2, presence of a long CP between the first signal and the second signal may be interpreted as including the long CP in the first symbol of the second signal.

Referring to Embodiment 1, if a long CP is not present between the first signal and the second signal, one or more gap symbols may be configured before transmitting the second signal, and the gap symbol may be used for beam switching time. If a long CP is present between the first signal and the second signal, the gap symbol may be reduced compared to the case where the long CP is not present, or the gap symbol may not be used. For example, based on absence of a long CP between the first signal and the second signal, the beam switching time may include n gap symbols. In addition, based on presence of a long CP between the first signal and the second signal, the beam switching time may include a long CP and a smaller number of gap symbols than n. n is a natural number greater than or equal to 1, and numbers smaller than n are natural numbers including 0. A gap symbol is present before the second signal in the time domain.

Referring to Embodiment 1, when the beam switching time is always configured to include some or all of a time period configuring a long CP, if a long CP is not present between the first signal and the second signal, the UE may not perform beam switching between the first signal and the second signal.

Referring to Embodiment 1, the beam switching time may be configured in the same unit as the long CP, for example, in units of 0.5 ms, and thus the beam switching time may always include the long CP.

Referring to Embodiment 2, when only a part of the long CP period is used as the power transient time, the UE may receive information about a ratio of a time period included in the power transient time of the long CP period, and based thereon, the UE may use a part of the long CP period as the power transient time.

Referring to Embodiment 2, in a mixed numerology situation, a ratio used as the power transient time if the long CP period may be determined considering that the length of symbols corresponding to each SCS is different.

Referring to Embodiment 2, the method of Embodiment 2 may also be applied to the power transient times for the first and second signals continuously transmitted through different frequency channels. For example, if the last symbol of the first signal is a symbol containing a normal CP and the first symbol of the second signal is a symbol containing a long CP, the power transient time may be distributed to the last symbol(s) of the first signal and the first symbol(s) of the second signal, and a ratio thereof may be 1:N as the last symbol(s) of the first signal: the first symbol(s) of the second signal. That is, more power transient time may be allocated to symbols including long CPs than to symbols including normal CPs.

Referring to Embodiments 1 and 2, whether the beam switching time and/or the power transient time includes some or all of a time period configuring the long CP may be configured through higher layer signaling, for example, SIB and/or dedicated RRC signaling.

Referring to Embodiments 1 and 2, the BS may always schedule the first signal and the second signal in such a way that a long CP is present between the first signal and the second signal, and the UE may always configure the beam switching time and/or the power transient time to include some or all of a time period configuring the long CP.

In addition to the operation of FIGS. 5 and 6 described above, one or more of the operations described through FIGS. 1 to 4 may be combined and additionally performed.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

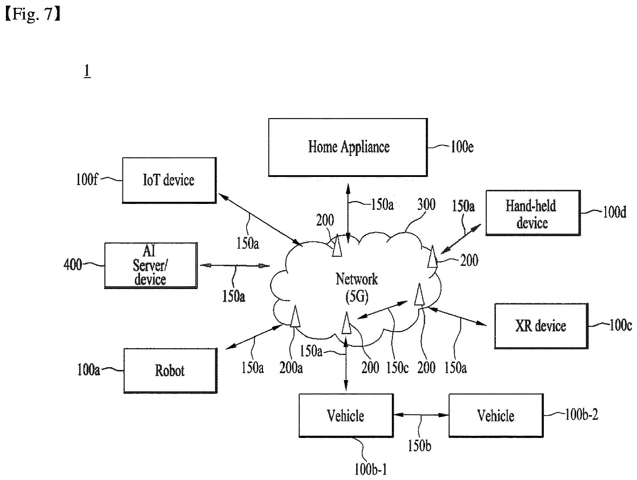

FIG. 7 illustrates a communication system 1 applied to the present disclosure.

Referring to FIG. 7, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 8 illustrates wireless devices applicable to the present disclosure.

Referring to FIG. 8, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 7.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

FIG. 9 illustrates another example of a wireless device applied to the present disclosure. The wireless device may be implemented in various forms according to a use case/service (refer to FIG. 7).

Referring to FIG. 9, wireless devices 100 and 200 may correspond to the wireless devices 100 and 200 of FIG. 8 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 8. For example, the transceiver(s) 114 may include the one or more transceivers 106 and 206 and/or the one or more antennas 108 and 208 of FIG. 8. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 19), the vehicles (100b-1 and 100b-2 of FIG. 7), the XR device (100c of FIG. 7), the hand-held device (100d of FIG. 7), the home appliance (100e of FIG. 7), the IoT device (100f of FIG. 7), a digital broadcasting terminal, a hologram device, a public safety device, an MTC device, a medical device, a FinTech device (or a finance device), a security device, a climate/environment device, the AI server/device (400 of FIG. 7), the BSs (200 of FIG. 7), a network node, or the like. The wireless device may be mobile or fixed according to a use case/service.

In FIG. 9, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

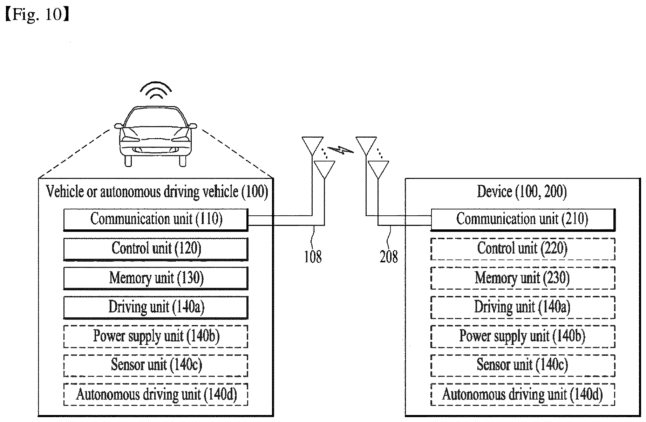

FIG. 10 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 10, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 9, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### [Industrial Availability]

As described above, the present disclosure is applicable to various wireless communication systems.

## Claims

1. A method of transmitting and receiving a signal by a user equipment (UE) in a wireless communication system, the method comprising:
transmitting or receiving a first signal; and
transmitting or receiving a second signal after the transmitting or receiving the first signal,
wherein:
based on that a long cyclic prefix (CP) is present between the first signal and the second signal, a beam switching time and/or a power transient time between the first signal and the second signal is configured to include some or all of a time period configuring the long CP; and
the long CP is a CP having a length of 16·Ts seconds added to a normal CP in units of 0.5 ms.

2. The method of claim 1, wherein:
based on that the long CP is not present between the first signal and the second signal, the beam switching time includes n gap symbols, n being a natural number equal to or greater than 1;
based on that a long CP is present between the first signal and the second signal, the beam switching time includes the long CP and gap symbols of a number less than n, the number less than n being a natural number including 0; and
the gap symbol is a symbol present before the second signal on a time domain.

3. The method of claim 1, wherein:
based on that the long CP is present between the first signal and the second signal through higher layer signaling, the beam switching time and/or the power transient time is configured to include some or all of a time period configuring the long CP; and
the higher layer signaling includes System Information Block (SIB) and/or dedicated Radio Resource Control (RRC) signaling.

4. The method of claim 1, wherein the first signal and the second signal are scheduled to allow the long CP to be present between the first signal and the second signal.

5. The method of claim 1, wherein, based on a long CP is not present between the first signal and the second signal, the beam switching time is not present between the first signal and the second signal.

6. The method of claim 1, wherein the beam switching time is configured in the same unit as the long CP.

7. The method of claim 1, wherein, based on information on a ratio of a time period included in the power transient time of a time period configuring the long CP, the power transient time is configured to include some of the time period configuring the long CP.

8. The method of claim 7, wherein the ratio is determined based on a symbol length of a first Subcarrier spacing (SCS) and a symbol length of a second SCS included in a mixed numerology.

9. The method of claim 1, wherein the first signal and the second signal are transmitted on different frequencies.

10. The method of claim 1, wherein, based on that a first symbol of the second signal includes the long CP, a long CP is determined to be present between the first signal and the second signal.

11. The method of claim 1, wherein:
the power transient time includes a symbol for transmitting the first signal and a symbol for transmitting the second signal; and
based on that a last symbol for transmitting the first signal includes a normal CP and a first symbol for transmitting the second signal includes a long CP, a ratio of the symbol for transmitting the second signal of the power transient time is configured to be higher than the symbol for transmitting the first signal.

12. A user equipment (UE) for transmitting and receiving a signal in a wireless communication system, comprising:
at least one transceiver;
at least one processor; and
at least one memory operatively connected to the at least one processor and configured to store instructions that when executed causes the at least one processor to perform a specific operation including:
transmitting or receiving a first signal; and
transmitting or receiving a second signal after the transmitting or receiving the first signal,
wherein:
based on that a long cyclic prefix (CP) is present between the first signal and the second signal, a beam switching time and/or a power transient time between the first signal and the second signal is configured to include some or all of a time period configuring the long CP; and
the long CP is a CP having a length of 16·Ts seconds added to a normal CP in units of 0.5 ms.

13. An apparatus for a user equipment (UE), comprising:
at least one processor; and
at least one computer memory operatively connected to the at least one processor and configured to when executed cause the at least one processor to perform an operation including:
transmitting or receiving a first signal; and
transmitting or receiving a second signal after the transmitting or receiving the first signal,
wherein:
based on that a long cyclic prefix (CP) is present between the first signal and the second signal, a beam switching time and/or a power transient time between the first signal and the second signal is configured to include some or all of a time period configuring the long CP; and
the long CP is a CP having a length of 16·Ts seconds added to a normal CP in units of 0.5 ms.

14. A computer-readable storage medium including at least one computer program that causes at least one processor to perform an operation comprising:
transmitting or receiving a first signal; and
transmitting or receiving a second signal after the transmitting or receiving the first signal,
wherein:
based on that a long cyclic prefix (CP) is present between the first signal and the second signal, a beam switching time and/or a power transient time between the first signal and the second signal is configured to include some or all of a time period configuring the long CP; and
the long CP is a CP having a length of 16·Ts seconds added to a normal CP in units of 0.5 ms.
